# FASCICULE DE BREVET EUROPEEN

(11) **EP 4 185 767 B1**
(45) Date de publication et mention de la délivrance du brevet: **30.10.2024**
(21) Numéro de dépôt: 21752086.5
(22) Date de dépôt: 21.07.2021
(51) Int. Cl.: F01D 17/16, B64C 11/00

(54) **MODULE DE TURBOMACHINE EQUIPE D'UNE HELICE ET D'AUBES DE STATOR SUPPORTEES PAR DES MOYENS DE MAINTIEN ET TURBOMACHINE CORRESPONDANTE**
TURBINENMOTORMODUL MIT PROPELLER- UND LEITSCHAUFELN MIT HALTEVORRICHTUNG UND ZUGEHÖRIGER TURBINENMOTOR
TURBINE ENGINE MODULE EQUIPPED WITH A PROPELLER AND STATOR VANES SUPPORTED BY RETAINING MEANS AND CORRESPONDING TURBINE ENGINE

(30) Priorité: 23.07.2020 FR 2007783
(43) Date de publication de la demande: 31.05.2023
(73) Titulaire: SAFRAN AIRCRAFT ENGINES, 75015 Paris (FR)
(72) Inventeur: CHARIER, Gilles Alain Marie, 77550 MOISSY-CRAMAYEL (FR)
(74) Mandataire: Gevers & Orès
(86) Numéro de dépôt international: PCT/FR2021/051361
(87) Numéro de publication internationale: WO 2022/018380

(56) Documents cités:
- FR-A1- 3 082 230
- FR-A1- 3 083 207
- US-A1- 2010 014 977
- US-A1- 2016 333 734
- US-A1- 2017 102 006

## Description

### Domaine de l'invention

La présente invention concerne le domaine des turbomachines. En particulier un module de turbomachine comprenant une hélice non carénée et un redresseur avec des aubes de stator. Elle vise également la turbomachine correspondante.

### Arrière-plan technique

Des turbomachines comprenant au moins une hélice non carénée sont connues sous le terme anglais « open rotor » ou « unducted fan ». Dans cette catégorie de turbomachine, il existe celles qui ont deux hélices non carénées et contrarotatives (connues sous l'acronyme anglais UDF pour « Unducted Dual Fan ») ou celles ayant une seule hélice non carénée et un redresseur comprenant plusieurs aubes de stator (connues sous l'acronyme anglais USF pour « Unducted Single Fan »). L'hélice ou les hélices formant la partie propulsive peu(ven)t être placée(s) à l'arrière du générateur de gaz (ou moteur) de sorte à être du type pousseur ou à l'avant du générateur de gaz de sorte à être du type tracteur. Ces turbomachines sont des turbopropulseurs qui se distinguent des turboréacteurs par l'utilisation d'une hélice à l'extérieur de la nacelle (non carénée) au lieu d'une soufflante interne. Cela permet d'augmenter le taux de dilution de façon très importante sans être pénalisé par la masse des carters ou nacelles destiné(e)s à entourer les pales de l'hélice ou soufflante. Un exemple est divulgué dans la demande de brevet US 2017/102006.

Les aubes de stator du redresseur sont installées généralement sur un carter d'entrée qui porte le bec de séparation des flux primaire et secondaire circulant respectivement dans une veine primaire et autour du carter d'entrée. Les aubes de stator s'étendent depuis le carter d'entrée et sont avantageusement à calage variable. Ces aubes de stator présentent également un grand diamètre de l'ordre de 1 mètre, voire 1,20 mètres, qui rend difficile l'encastrement des pieds pivotants des aubes de stator dans leurs logements et leurs tenues mécaniques sous sollicitation vibratoire. Les vibrations peuvent entraîner le blocage des axes de pivotement ou la rupture de l'aube de stator elle-même ou d'organes environnants.

### Résumé de l'invention

L'objectif de la présente invention est de fournir un module de turbomachine avec des aubes de stator ayant une meilleure stabilité mécanique tout en étant économique.

Nous parvenons à cet objectif conformément à l'invention grâce à un module de turbomachine d'axe longitudinal X, comportant :
- une hélice non carénée destinée à être entrainée en rotation autour de l'axe longitudinal X,
- au moins un redresseur comprenant une pluralité d'aubes de stator s'étendant sensiblement suivant un axe radial Z, chaque aube de stator comprenant un pied et une pale s'élevant radialement depuis le pied, et
- un système de changement de pas des pales des aubes de stator autour d'un axe de calage A qui traverse le pied de chaque aube de stator,
au moins deux aubes de stator adjacentes étant reliées entre elles par au moins un organe de maintien qui est couplé aux pales des aubes de stator par au moins un arbre de pivotement et qui est monté radialement à distance du pied des aubes de stator, ledit arbre de pivotement s'étendant suivant un axe de pivotement B coaxial à l'axe de calage A et étant destiné à permettre un pivotement des aubes de stator autour de l'axe de pivotement B, et en ce que le module de turbomachine comprend des moyens anti-vibration de l'arbre de pivotement.

Ainsi, cette solution permet d'atteindre l'objectif susmentionné. En particulier, le fait d'installer cet organe de maintien au moins entre deux aubes de stator adjacentes et les moyens anti-vibration de l'arbre de pivotement des aubes permet d'améliorer la tenue mécanique des aubes. Plus précisément, le pied pivotant autour de l'axe de calage et l'organe de maintien qui d'une part, relie au moins deux à deux les aubes de stator et d'autre part, est éloigné radialement du pied pivotant des aubes, engendrent un maintien efficace des aubes de stator. Cette configuration est également favorable à la diminution de la transmission des vibrations depuis le pied des aubes jusqu'à leurs extrémités libres. L'ensemble est alors plus rigide.

Le module comprend également l'une ou plusieurs des caractéristiques suivantes, prises seules ou en combinaison :
- l'arbre de pivotement est configuré de manière à permettre un pivotement des aubes de stator par rapport à l'organe de maintien.
- l'organe de maintien comprend au moins un logement dans lequel est monté l'arbre de pivotement, au moins un palier de guidage en rotation de l'arbre de pivotement et les moyens anti-vibration qui sont agencés entre une surface interne du logement et le palier de guidage.

- les moyens anti-vibration comprennent un anneau élastique centré sur l'axe de pivotement B de l'arbre de pivotement.
- l'axe de calage A est incliné par rapport à l'axe radial Z.
- l'arbre de pivotement traverse au moins en partie la pale de chaque aube de stator suivant l'axe de calage A.
- l'arbre de pivotement est agencé à une extrémité radialement externe de chaque pale.
- l'organe de maintien est annulaire et s'étend autour de l'axe longitudinal X.
- l'organe de maintien est relié à un carter d'entrée du module de turbomachine par plusieurs bras qui sont répartis autour de l'axe longitudinal X.
- le module de turbomachine comprend un dispositif de dégivrage d'au moins l'axe de pivotement B de l'arbre de pivotement, le dispositif de dégivrage comprenant au moins une canalisation d'acheminement d'air chaud destinée à prélever de l'air chaud dans une veine primaire de la turbomachine, la canalisation d'acheminement s'étendant au moins en partie à l'intérieur de l'organe de maintien.
- chaque pale comprend une encoche qui est formée dans la pale, l'encoche comprenant un fond et débouchant sur un bord de fuite, l'arbre de pivotement s'étendant dans l'encoche suivant l'axe de pivotement B.
- le redresseur est disposé en aval de l'hélice.
- les aubes de stator présentent une hauteur radiale inférieure à une hauteur radiale des aubes de l'hélice.

L'invention concerne en outre une turbomachine d'aéronef comprenant au moins un module de turbomachine présentant l'une quelconque des caractéristiques précédentes.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
[Fig. 1] La figure 1 est une vue schématique, en coupe axiale et partielle d'un exemple de turbomachine avec une seule hélice non carénée et un redresseur à laquelle s'applique l'invention ;
[Fig. 2] La figure 2 représente suivant une coupe partielle et axiale un exemple de réalisation de moyens de maintien d'un redresseur monté en aval d'une hélice d'un module de turbomachine selon l'invention ;
[Fig. 3] La figure 3 illustre plus en détail les moyens de connexion de la pale d'une aube de redresseur avec des moyens de maintien selon la figure 2 ;
[Fig. 4] La figure 4 est une variante de réalisation du montage d'un arbre de pivotement sur une pale d'aube de stator de sorte à permettre le pivotement et la maintien de l'aube de stator selon l'invention ;
[Fig. 5] La figure 5 représente suivant une coupe partielle et axiale un autre exemple de réalisation de moyens de maintien d'un redresseur monté en aval d'une hélice d'un module de turbomachine selon l'invention ; et
[Fig. 6] La figure 6 illustre en coupe axiale et partielle encore un autre exemple de réalisation de moyens de maintien d'un redresseur monté en aval d'une hélice d'un module de turbomachine selon l'invention.

### Description détaillée de l'invention

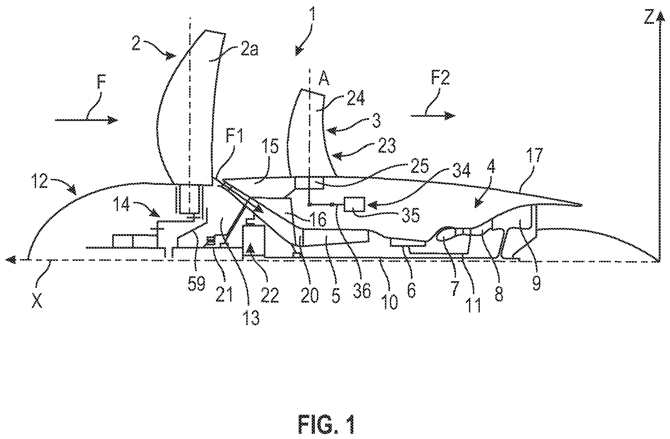

L'invention s'applique à une turbomachine 1 comprenant une seule hélice 2 non carénée et un redresseur 3 non carénée non plus. La turbomachine est destinée à être montée sur un aéronef. Une telle turbomachine est un turbopropulseur tel que représenté sur la figure 1. Cette turbomachine est connue sous l'expression anglaise « Unducted Single Fan » comme explicité précédemment. Bien entendu l'invention s'applique à d'autres types de turbomachine.

Dans la présente invention, et de manière générale, les termes « amont », « aval » « axial » et « axialement » sont définis par rapport à la circulation des gaz dans la turbomachine et ici suivant l'axe longitudinal X (et même de gauche à droite sur la figure 1). De même, les termes « radial », « interne » et « externe » sont définis par rapport à un axe radial Z perpendiculaire à l'axe longitudinal X et au regard de l'éloignement par rapport à l'axe longitudinal X.

Sur la figure 1, la turbomachine 1 comprend un générateur de gaz 4 qui comporte typiquement d'amont en aval, un compresseur basse pression 5, un compresseur haute pression 6, une chambre de combustion 7, une turbine haute pression 8 et une turbine basse pression 9. Le compresseur basse pression 5 et la turbine basse pression 9 sont reliés mécaniquement par un arbre basse pression 10 de manière à former un corps basse pression. Le compresseur haute pression 6 et la turbine haute pression 8 sont reliés mécaniquement par un arbre haute pression 11 de manière à former un corps haute pression. L'arbre basse pression 10 s'étend au moins en partie à l'intérieur de l'arbre haute pression 11 et sont coaxiaux à l'axe longitudinal X.

Dans une autre configuration non représentée, le corps basse pression ou de faible pression comprend le compresseur basse pression qui est relié à une turbine de pression intermédiaire. Une turbine libre de puissance est montée en aval de la turbine de pression intermédiaire et est reliée à l'hélice décrite ci-après via un arbre de transmission de puissance pour l'entraîner en rotation.

L'hélice 2 non carénée est formée d'une couronne de pales 2a mobiles qui s'étendent depuis un carter rotatif 12 qui est centré et mobile en rotation autour de l'axe longitudinal X. Le carter rotatif 12 est monté mobile par rapport à un carter interne 13 qui s'étend en aval du carter rotatif 12. Dans l'exemple représenté de la figure 1, l'hélice 2 est montée en amont du générateur de gaz 4 (configuration de tracteur ou « puller » en anglais). De manière alternative, l'hélice 2 est montée en aval du générateur de gaz 4 (configuration de pousseur ou « pusher » en anglais). Les pales 2a de l'hélice 2 peuvent être à calage variable au moyen d'un système de changement de pas 14.

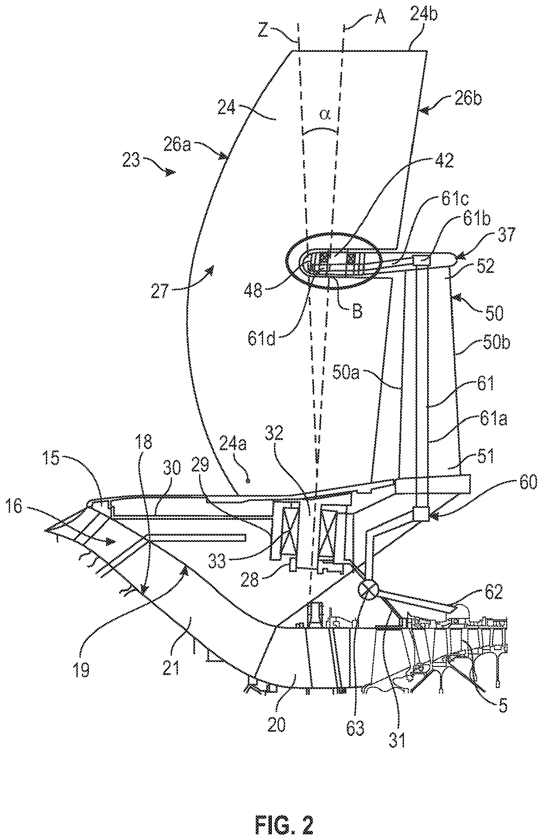

Un flux d'air F qui traverse la turbomachine 1 se divise en un flux d'air primaire F1 et en un flux d'air secondaire F2 au niveau d'un bec de séparation 15. Ce dernier est porté par un carter d'entrée 16 centré sur l'axe longitudinal. Le carter rotatif 12 est également monté mobile par rapport au carter d'entrée 16. Ce dernier est prolongé en aval par un carter externe ou carter inter-veine 17. En particulier, le carter d'entrée 16 comprend une virole radialement interne 18 et une virole radialement externe 19 (cf. figure 2) qui sont centrées sur l'axe X et qui forment en partie, respectivement les parois radialement interne et externe de la veine primaire 20 dans laquelle circule le flux d'air primaire F1. Une pluralité de bras structuraux 21 s'étend radialement entre la virole radialement interne 18 et la virole radialement externe 19.

L'arbre de puissance ou l'arbre basse pression 10 (respectivement de la turbine libre de puissance et de la turbine basse pression) entraîne l'hélice 2 qui comprime le flux d'air à l'extérieur du carter externe 17 et fournit la majeure partie de la poussée. Eventuellement, un réducteur 22 est interposé entre l'hélice 2 et l'arbre de puissance comme cela est représenté sur la figure 1. Le réducteur 22 peut être de type à train planétaire ou à train épicycloïdal.

En référence aux figures 1 et 2, le redresseur 3 est disposé en aval de l'hélice 2. Le redresseur 3 comprend une pluralités d'aubes de stator 23 (ou aubes fixes) connues sous l'acronyme anglais « OGV » pour Outlet Guide Vane. Les aubes de stator 23 sont réparties régulièrement autour de l'axe longitudinal X et s'étendent radialement dans le flux d'air secondaire F2. Les aubes de stator 23 du redresseur 3 sont disposées en aval des pales 2a de l'hélice 2 de manière à redresser le flux d'air généré par celles-ci.

Les différents éléments décrits ci-dessus sont assemblés et/ou fabriqués de manière modulaire de sorte à les fabriquer plus facilement et à faciliter leurs maintenances. Ici, nous entendons pas module de turbomachine, un module qui comprend au moins une hélice et un redresseur.

Suivant l'exemple, les pales des aubes de stator 23 de ce module présentent une hauteur sensiblement suivant l'axe radial qui est inférieure à celle des pales 2a de l'hélice 2. De la sorte, les aubes de stator peuvent redresser le flux créé par l'hélice 2 en amont tout en réduisant la trainée ni en étant trop lourd. Les aubes de stator 23 présentent une hauteur suivant l'axe radial qui est comprise entre 30% et 90% de la hauteur radiale des pales de l'hélice 2.

Chaque aube de stator 23 comprend une pale 24 qui s'étend radialement depuis un pied 25. Les pales 24 comprennent également chacune un bord attaque 26a et un bord de fuite 26b opposés axialement. Les bords d'attaque et de fuite 26a, 26b sont reliés par des surfaces intrados et extrados 27 qui sont opposées transversalement. Il y a entre six et huit aubes de stator 23 autour du carter d'entrée 16.

Les aubes de stator 23 sont avantageusement à calage variable de manière à optimiser la performance de la turbomachine. Un deuxième système de changement de pas 34 qui est monté dans la turbomachine, et en particulier dans le carter externe 17, est relié aux pales des aubes de stator 23 de manière à leur permettre de pivoter autour de leurs axes de calage. A cet effet, comme nous pouvons le voir sur la figure 2, chaque pied 25 d'aube de stator 23 est monté dans un logement interne 28 qui est formé dans un manchon 29. Ce dernier est porté par un anneau qui est fixé rigidement au carter d'entrée 16 en amont par une première patte 30 et en aval par une deuxième patte 31. Chaque manchon 29 est cylindrique et s'étend sensiblement suivant l'axe radial. Les manchons et les pattes 30, 31 sont venus de matière (monoblocs). De manière alternative, les manchons 29 et les pattes 30, 31 sont fabriqués séparément puis assemblés pour former un ensemble monobloc.

En référence à la figure 2, nous pouvons voir que le pied 25 de chaque aube 23 se présente typiquement sous la forme d'un pivot 32 qui est monté pivotant suivant un axe de calage A dans le logement interne 28 du manchon 29. Le pivot 32 du pied 25 est monté pivotant grâce à au moins un palier de guidage 33 qui assure la rétention du pivot 32 dans le logement interne 28 de chaque manchon 29. Deux paliers de guidage peuvent être montés dans le logement 28 et de manière superposée suivant l'axe de calage A. Le ou les paliers est/sont de préférence, mais non limitativement, à roulements.

Le système de changement de pas 34 comprend au moins un moyen de commande 35 et au moins un mécanisme de liaison 36 qui sont représentés schématiquement sur la figure 1. Le mécanisme de liaison 36 est relié d'une part, à chaque pied 25 d'aube 24 et au moyen de commande 35 d'autre part. Le pivot 32, qui traverse le manchon 29 de part et d'autre suivant l'axe de calage A, comprend une extrémité interne avec un excentrique qui est reliée à l'extrémité d'une biellette (non représentée) du mécanisme de liaison 36. Ce dernier comprend une pluralité de biellettes dont une de leurs extrémités est reliée chacune à un pied d'aube. L'autre extrémité de chaque biellette est reliée à un organe mobile du moyen de commande pouvant être un vérin hydraulique ou pneumatique.

Tel qu'illustré également sur la figure 2, l'axe de calage A est incliné par rapport à l'axe radial Z. L'angle d'inclinaison est compris entre 5° et 45°. De manière avantageuse, l'axe de calage est incliné vers l'aval. Une telle inclinaison permet que le calage des aubes de stator aient un effet aérodynamique adapté sur toutes la hauteur radiale des aubes de stator 23.

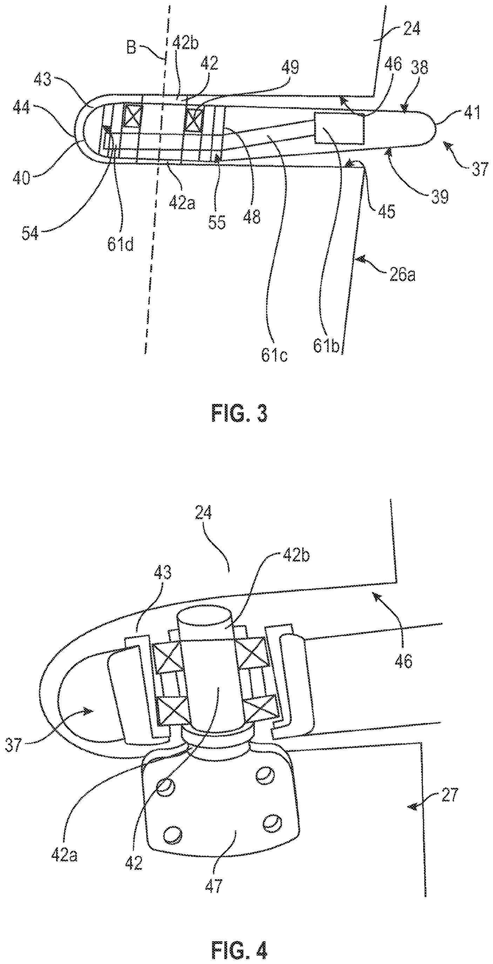

Suivant le mode de réalisation des figures 2 et 3, des moyens de maintien sont destinés à assurer la tenue mécanique des aubes de stator 23. Les moyens de maintien sont couplés aux aubes de stator 23 via au moins une liaison pivot. En particulier, au moins une pale 24 d'aube de stator 23 pivote par rapport à un organe de maintien 37 permettant une stabilité de celle-ci lors de son pivotement et lors du fonctionnement de la turbomachine. L'organe de maintien 37 s'étend au moins entre deux aubes de stator 23 adjacentes suivant une direction circonférentielle. L'organe de maintien 37 est monté radialement à distance du pied 25 des aubes de stator qui est traversé par l'axe de calage A. De manière avantageuse, mais non limitativement, l'organe de maintien 37 est annulaire et s'étend autour de l'axe longitudinal X (360°). De la sorte, les aubes de stator 23 sont maintenues chacune d'une part, au niveau des pieds et d'autre part, au niveau d'une portion de la pale par l'organe de maintien 37.

L'organe de maintien 37 se présente sous la forme d'une virole qui a une section de forme aérodynamique, par exemple de type NACA. L'organe de maintien 37 comprend une surface externe 38 et une surface interne 39 qui sont reliées d'une part, par un premier bord 40 et d'autre part, par un deuxième bord 41.

Chaque pale 24 pivote grâce à un arbre de pivotement 42 dont l'axe de pivotement B est ici coaxial à l'axe de calage A et s'étend au moins en partie dans la pale 24. Chaque pale 24 comprend une encoche 43 qui est située dans cet exemple environ à mi-hauteur de la pale (suivant la hauteur de la pale mesurée entre son extrémité radialement interne 24a et son extrémité radialement externe 24b libre). L'encoche 43 s'étend sensiblement axialement depuis un fond 44 et le bord de fuite 26b de la pale 24. L'encoche 43 débouche plus précisément sur le bord de fuite 26b, mais aussi transversalement sur la surface intrados 27 et sur la surface extrados de la pale 24. Sur la figure 3, nous voyons que l'encoche 43 comprend une paroi radialement interne 45 et une paroi radialement externe 46 qui sont opposées et espacées sensiblement suivant l'axe radial. Le fond 44 est allongé par les parois radialement interne et externe 45, 46. L'arbre de pivotement 42 s'étend entre la paroi radialement interne 45 et la paroi radialement externe 46, suivant l'axe de calage A. Le premier bord 40 de l'organe de maintien 37 est en regard et à distance du fond 44 de l'encoche 4. A l'inverse, le deuxième s'étend à l'extérieur de l'encoche 43 et est décalé axialement du bord de fuite 26b de la pale 24. De même les surfaces 38, 39 de l'organe de maintien sont à distance des parois radialement interne et externe 45, 46 pour que le pivotement de la pale se réalise aisément.

Chaque arbre de pivotement 42 comprend une première extrémité 42a qui est solidaire de la paroi radialement interne 45 et une deuxième extrémité 42b qui est solidaire de la paroi radialement externe 46. L'arbre de pivotement 42 et la pale 24 peuvent être réalisés d'un seul tenant (venus de matière).

La figure 4 illustre une variante de réalisation des moyens de maintien des aubes de stator 23. Les éléments identiques ou sensiblement identiques à ceux présentés précédemment et/ou avec les mêmes fonctions sont représentés par les mêmes références numériques. Chaque pale 24 pivote grâce à une arbre de pivotement 42 également. Ce dernier comprend à sa première extrémité 42a au moins une platine 47 qui est fixée sur une surface intrados 27 et/ou extrados de la pale 24. La platine 47 est fixée grâce à des organes de fixation tels que des vis 53 ou par des soudures. L'axe de pivotement B est dans ce cas décalé du plan dans lequel est définie la platine 47 de manière que l'arbre pivotement 42 soit à l'intérieur de l'encoche 43. La deuxième extrémité 42b de l'arbre de pivotement 42 est libre et à distance de la paroi radialement externe 46 de la pale 24. Bien entendu, la deuxième extrémité 42b peut être fixée à la pale via une platine et la première extrémité peut être libre. De même, les première et deuxième extrémités 42a, 42b de l'arbre de pivotement 42 peuvent être portées chacune par au moins une platine qui est fixée à la surface intrados et/ou à la surface extrados de la pale des aubes de stator 23.

Plus en détail sur la figure 3, l'organe de maintien 37 comprend au moins un logement 48 dans lequel est monté l'arbre de pivotement 42. Le logement 48 est formé par un alésage traversant la paroi de l'organe de maintien 37 de part et d'autre et sensiblement suivant l'axe de calage A (sensiblement suivant l'axe radial Z). En d'autres termes, l'arbre de pivotement 42 traverse ici le logement 48. Ce dernier est cylindrique d'axe coaxial à celui de l'arbre de pivotement 42. L'arbre de pivotement 42 est guidé en rotation au moyen d'un au moins un palier de guidage 49. De préférence, le palier de guidage 49 est à roulements. Le palier 49 comprend une bague interne, une bague externe et des éléments roulants agencés entre la bague interne et la bague externe. La bague interne est solidaire de l'arbre de pivotement et la bague externe est solidaire de une surface interne 54 du logement 48. Les éléments roulants peuvent être des billes ou des rouleaux.

Des moyens anti-vibration 55 de l'arbre de pivotement 42 sont également logés dans le logement 48 de manière à participer à la tenue mécanique de l'aube de stator 23 et à limiter la propagation des vibrations. Les moyens anti-vibration 55 sont logés entre une surface interne du logement 48 et le palier de guidage 49. En particulier, les moyens anti-vibration 55 comprennent de manière avantageuse un anneau en matériau élastique qui est centré sur l'axe de pivotement B de l'arbre de pivotement 42. Le matériau élastique peut comprend un élastomère tel qu'un caoutchouc.

Comme nous pouvons le voir sur la figure 1, l'organe de maintien 37 est également supporté par plusieurs bras 50 pour améliorer la tenue mécanique des aubes de stator 23. Au moins un bras 50 relie l'organe de maintien 37 à une structure fixe de la turbomachine. Avantageusement, le carter d'entrée 16 constitue la structure fixe. Dans le présent exemple, il y a trois bras 50 qui sont répartis régulièrement autour de l'axe longitudinal X. Les bras 50 s'étendent sensiblement radialement entre l'organe de maintien 37 et le carter d'entrée 16. Chaque bras présente avantageusement, mais non limitativement une forme aérodynamique avec un bord amont 50a et bord aval 50b qui sont opposés axialement et qui relient chacun une première surface et une deuxième surface qui sont opposées transversalement. Le bord amont 50a des bras 50 s'étend radialement à distance du bord de fuite 26b de manière à garantir le pivotement de chaque pale 24. Chaque bras 50 comprend en outre une première extrémité 51 qui est solidarisée au carter d'entrée 16. La première extrémité 51 est avantageusement fixée sur une virole du carter d'entrée 16. De manière avantageuse, mais non limitativement, la première extrémité 51 est fixée grâce à des éléments de fixation tels que des vis, écrous, boulon ou tout autre élément permettant un montage et/ou un démontage de celle-ci facilement. Chaque bras 50 comprend également une deuxième extrémité 52 qui est solidarisée à l'organe de maintien 37. La deuxième extrémité 52 est opposée radialement à la première extrémité 51. La deuxième extrémité 52 peut être fixée également par des éléments de fixation tels que des vis, des écrous, boulon ou de la colle ou encore une soudure. Suivant une autre alternative, les bras et l'organe de maintien 37 sont formés d'une seule pièce (venus de matière). Les bas 50 sont chacun creux de préférence.

Comme nous pouvons le voir sur la figure 2 et en partie sur la figure 3, un dispositif de dégivrage 60 est également prévu pour éviter que de la glace ne se forme au moins au niveau de la liaison pivot entre les pales 24 et l'organe de maintien 37. Le pivotement des aubes de stator 23 est alors garanti dans toutes les circonstances. Le dispositif de dégivrage 60 est destiné à prélever de l'air chaud dans la veine primaire 20 et à le distribuer dans les moyens de maintien (organe de maintien 37 et bras 50) des aubes de stator 23. L'air chaud est prélevé en particulier au niveau du compresseur basse pression 5 qui élève la température du flux d'air entrant dans la turbomachine.

Selon l'exemple représenté sur la figure 2, le dispositif de dégivrage 60 comprend une canalisation 61 d'acheminement d'air chaud avec une première extrémité 62 débouchant dans la veine primaire 20. Le dispositif 60 comprend une vanne de commande 63 qui est disposée sur la canalisation 61 pour commander le débit de flux d'air chaud à prélever et réguler le débit. La vanne 63 est disposée en aval de la première extrémité 62 suivant le sens de circulation du flux d'air chaud dans la canalisation 61.

La canalisation 61 comprend en particulier une première portion 61a qui est reliée à la première extrémité 62 et qui chemine à l'intérieur d'au moins un bras 50. La canalisation 61 comprend une deuxième portion 61b qui est reliée à la première portion 61a. La deuxième portion 61b chemine dans l'organe de maintien 37 suivant une direction circonférentielle. Enfin, la canalisation 61 comprend une troisième portion 61c qui est reliée d'une part à la deuxième portion 61b et qui est reliée d'autre part à une deuxième extrémité de la canalisation 61 qui débouche à proximité de l'arbre de pivotement 42. La deuxième portion 61b distribue de l'air chaud vers tous les logements 48 de l'organe de maintien. Sur la figure 2, la canalisation 61 comprend une portion en anneau 61d qui entoure chaque logement 48. Dans ce cas, la deuxième extrémité de la canalisation 61 débouche dans la troisième portion 61c de la canalisation 61 qui se trouve dans l'organe de maintien 37.

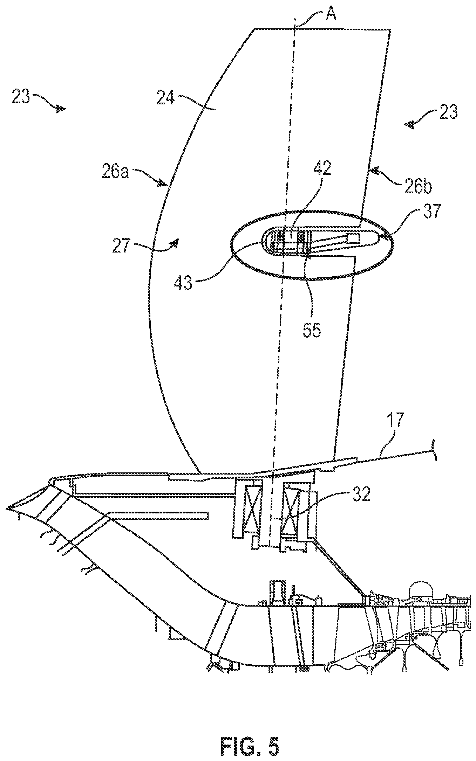

Un autre mode de réalisation du redresseur 3 installé en aval de l'hélice 2 est illustré sur la figure 5. Les aubes de stator 23 du redresseur 3 sont maintenues également au moins en partie par des moyens de maintien comprenant au moins un organe de maintien 37. Les pales 24 des aubes de stator comprennent pour cela, au moins en partie, une encoche 43 débouchant dans le bord de fuite de celles-ci. Les éléments identiques ou sensiblement identiques à ceux présentés précédemment et/ou avec les mêmes fonctions sont représentés par les mêmes références numériques. La différence avec le mode de réalisation précédent des figures 1 à 3, est que les moyens de maintien 37 sont dépourvus de bras s'étendant radialement entre le carter externe et l'organe de maintien. Dans ce cas, l'organe de maintien 37 est annulaire, s'étend autour de l'axe longitudinal et traverse les encoches 43 de toutes les pales 24 des aubes de stator circonférentiellement. Un arbre de pivotement traverse radialement chaque encoche 43. Les pales 24 pivotent chacune au niveau de leur pied et au niveau de l'arbre de pivotement 42 situé à mi-hauteur de la pale. En particulier, l'arbre de pivotement traverse le logement 48 qui est avantageusement équipé des moyens anti-vibration 55.

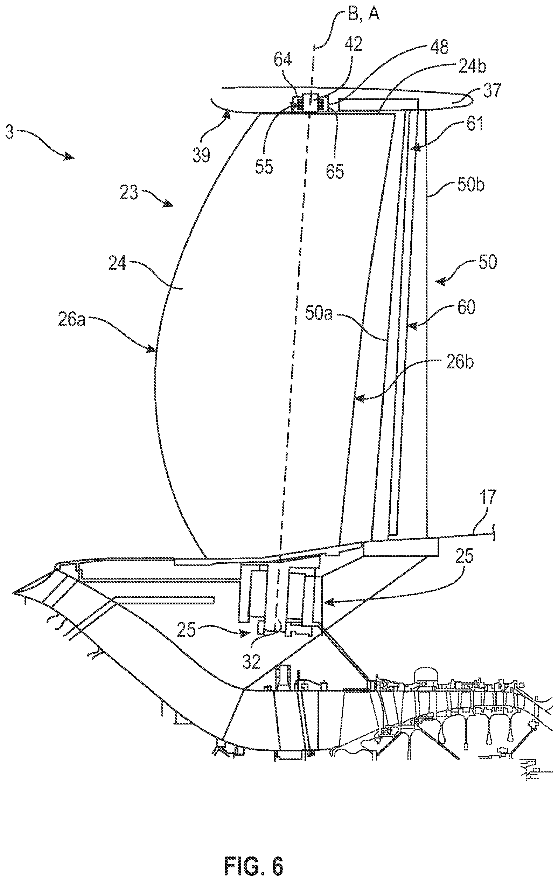

La figure 6 représente encore un autre mode de réalisation du redresseur 3 installé en aval de l'hélice 2. Les aubes de stator 23 du redresseur 3 sont maintenues également au moins en partie par au moins des moyens de maintien. Les éléments identiques ou sensiblement identiques à ceux présentés précédemment et/ou avec les mêmes fonctions sont représentés par les mêmes références numériques. Dans le présent exemple, les moyens de maintien comprennent au moins un bras 50 et au moins un organe de maintien 37 qui est porté par le bras 50. Un arbre de pivotement 42 est agencé à l'extrémité radialement externe 24b libre d'au moins une pale 24 des aubes de stator 23. Ici, toutes les pales sont équipées d'un arbre de pivotement 42 s'étendant radialement vers l'extérieur et depuis l'extrémité radialement externe 24b. Dans ce cas, l'organe de maintien 37 est monté également à l'extrémité radialement externe 24b des pales 24 des aubes de statir 23 et s'étend circonférentiellement entre au moins deux aubes adjacentes. Avantageusement, l'organe de maintien est annulaire (360°) et s'étend autour de l'axe longitudinal X. L'organe de maintien comprend plusieurs logements 48 avec chacun un fond 64 et une ouverture 65 qui débouche sur la surface interne 39 de l'organe de maintien 37. En d'autres termes, les logements ne sont pas traversant. Chaque logement 48 est disposé régulièrement dans l'organe de maintien 37 suivant la direction circonférentielle et de manière à être en regard d'un arbre de pivotement 42 correspondant. Les moyens anti-vibration 55 et le palier de guidage 49 en rotation sont logés dans chaque logement 48. Plusieurs bras 50 s'étendent radialement entre l'organe de maintien 37 et le carter externe 17. Ceux-ci s'étendent également à distance axialement des aubes de stator et en particulier des bords de fuite 26b. Un dispositif de dégivrage 60 équipent également les moyens de maintien. Plus précisément, la canalisation 61 du dispositif de dégivrage 60 dont une portion équipe les bras 50 s'étend jusque dans l'organe de maintien 37 en partie supérieure de l'aube de stator 23. Ainsi, les aubes de stator 23 sont maintenues au niveau de leur pied 25 et des extrémités radialement externe 27b (tête de l'aube) et peuvent pivoter facilement, tout en étant amorti et en toutes circonstances.

## Revendications

1. Module de turbomachine d'axe longitudinal X, comportant :
- une hélice (2) non carénée destinée à être entraînée en rotation autour de l'axe longitudinal X,
- au moins un redresseur (3) comprenant une pluralité d'aubes de stator (23) s'étendant sensiblement suivant un axe radial Z, chaque aube de stator (23) comprenant un pied (25) et une pale (24) s'élevant radialement depuis le pied (25), et
- un système de changement de pas (34) des pales des aubes de stator (23) autour d'un axe de calage A qui traverse le pied (25) de chaque aube de stator (23),
**caractérisé en ce qu'**au moins deux aubes de stator (23) adjacentes sont reliées entre elles par au moins un organe de maintien (37) qui est couplé aux pales (24) des aubes de stator (23) par au moins un arbre de pivotement (42) et qui est monté radialement à distance du pied (25) des aubes de stator (23), ledit arbre de pivotement (42) s'étendant suivant un axe de pivotement B coaxial à l'axe de calage A et étant destiné à permettre un pivotement des aubes de stator (23) autour de l'axe de pivotement B, et **en ce qu'**il comprend des moyens anti-vibration (55) de l'arbre de pivotement (42).

2. Module de turbomachine selon la revendication précédente, **caractérisé en ce que** l'organe de maintien (37) comprend au moins un logement (48) dans lequel est monté l'arbre de pivotement (42), au moins un palier de guidage (49) en rotation de l'arbre de pivotement (42) et les moyens anti-vibration (55) qui sont agencés entre une surface interne (54) du logement (48) et le palier de guidage (49).

3. Module de turbomachine selon l'une quelconque des revendications précédentes, **caractérisé en ce que** les moyens anti-vibration (55) comprennent un anneau élastique centré sur l'axe de pivotement B de l'arbre de pivotement (42).

4. Module de turbomachine selon l'une quelconque des revendications précédentes, **caractérisé en ce que** l'axe de calage A est incliné par rapport à l'axe radial Z.

5. Module de turbomachine selon l'une quelconque des revendications précédentes, **caractérisé en ce que** l'arbre de pivotement (42) traverse au moins en partie la pale de chaque aube de stator (23) suivant l'axe de calage A.

6. Module de turbomachine selon l'une quelconque des revendications 1 à 4, **caractérisé en ce que** l'arbre de pivotement (42) est agencé à une extrémité radialement externe (24b) de chaque pale (24).

7. Module de turbomachine selon l'une quelconque des revendications précédentes, **caractérisé en ce que** l'organe de maintien (34) est annulaire et s'étend autour de l'axe longitudinal X.

8. Module de turbomachine selon l'une quelconque des revendications précédentes, **caractérisé en ce que** l'organe de maintien (37) est relié à un carter d'entrée (16) du module de turbomachine par plusieurs bras (50) qui sont répartis autour de l'axe longitudinal X.

9. Module de turbomachine selon l'une quelconque des revendications précédentes, **caractérisé en ce qu'**il comprend un dispositif de dégivrage (60) d'au moins l'axe de pivotement B de l'arbre de pivotement (42), le dispositif de dégivrage (60) comprenant au moins une canalisation (61) d'acheminement d'air chaud destinée à prélever de l'air chaud dans une veine primaire (20) de la turbomachine, la canalisation (61) d'acheminement s'étendant au moins en partie à l'intérieur de l'organe de maintien (37).

10. Turbomachine (1) d'aéronef comprenant au moins un module de turbomachine selon l'une quelconque des revendications précédentes.

## Patentansprüche

1. Modul eines Turbotriebwerks mit einer Längsachse X, umfassend:
- einen nicht ummantelten Propeller (2), der dazu bestimmt ist, um die Längsachse X herum rotierend angetrieben zu werden,
- mindestens einen Gleichrichter (3), umfassend eine Vielzahl von Statorschaufeln (23), die sich im Wesentlichen entlang einer radialen Achse Z erstrecken, wobei jede Statorschaufel (23) einen Fuß (25) und einen Flügel (24) umfasst, der von dem Fuß (25) radial aufsteigt, und
- ein System (34) zur Änderung von Anstellwinkeln der Statorschaufeln (23) um eine Feststellpositionachse A herum, die den Fuß (25) von jeder Statorschaufel (23) durchquert,
**dadurch gekennzeichnet,dass** mindestens zwei benachbarte Statorschaufeln (23) untereinander durch mindestens ein Haltebauteil (37) verbunden sind, das mit den Flügeln (24) der Statorschaufeln (23) durch mindestens eine Schwenkwelle (42) gekoppelt ist und das von dem Fuß (25) der Statorschaufeln (23) in einem Abstand radial montiert ist, wobei sich die Schwenkwelle (42) entlang einer Schwenkachse B erstreckt, die zu der Feststellpositionachse A koaxial ist und dazu bestimmt ist, ein Schwenken der Statorschaufeln (23) um die Schwenkachse B herum zu gestatten, und dadurch, dass es Antivibrationsmittel (55) der Schwenkwelle (42) umfasst.

2. Modul eines Turbotriebwerks nach dem vorstehenden Anspruch, **dadurch gekennzeichnet, dass** das Haltebauteil (37) mindestens eine Aufnahme (48), in der die Schwenkwelle (42) montiert ist, mindestens ein Rotationsführungslager (49) der Schwenkwelle (42) und die Antivibrationsmittel (55) umfasst, die zwischen einer internen Oberfläche (54) der Aufnahme (48) und dem Führungslager (49) angeordnet sind.

3. Modul eines Turbotriebwerks nach einem der vorstehenden Ansprüche, **dadurch gekennzeichnet, dass** die Antivibrationsmittel (55) einen elastischen Ring umfassen, der auf der Schwenkachse B der Schwenkwelle (42) zentriert ist.

4. Modul eines Turbotriebwerks nach einem der vorstehenden Ansprüche, **dadurch gekennzeichnet, dass** die Feststellpositionachse A bezüglich der radialen Achse Z geneigt ist.

5. Modul eines Turbotriebwerks nach einem der vorstehenden Ansprüche, **dadurch gekennzeichnet, dass** die Schwenkwelle (42) den Flügel von jeder Statorschaufel (23) entlang der Feststellpositionachse A mindestens zum Teil durchquert.

6. Modul eines Turbotriebwerks nach einem Ansprüche 1 bis 4, **dadurch gekennzeichnet, dass** die Schwenkwelle (42) an einem radial externen Ende (24b) von jedem Flügel (24) angeordnet ist.

7. Modul eines Turbotriebwerks nach einem der vorstehenden Ansprüche, **dadurch gekennzeichnet, dass** das Haltebauteil (34) ringförmig ist und sich um die Längsachse X herum erstreckt.

8. Modul eines Turbotriebwerks nach einem der vorstehenden Ansprüche, **dadurch gekennzeichnet, dass** das Haltebauteil (37) mit einem Eintrittsgehäuse (16) des Moduls eines Turbotriebwerks durch mehrere Arme (50) verbunden ist, die um die Längsachse X herum verteilt sind.

9. Modul eines Turbotriebwerks nach einem der vorstehenden Ansprüche, **dadurch gekennzeichnet, dass** es eine Enteisungsvorrichtung (60) von mindestens der Schwenkachse B der Schwenkwelle (42) umfasst, wobei die Enteisungsvorrichtung (60) mindestens eine Kanalisierung (61) zur Weiterleitung von warmer Luft umfasst, die dazu bestimmt ist, warme Luft in einer primären Vene (20) des Turbotriebwerks zu entnehmen, wobei die Kanalisierung (61) zur Weiterleitung sich mindestens zum Teil im Inneren des Haltebauteils (37) erstreckt.

10. Turbotriebwerk (1) eines Luftfahrzeugs, umfassend mindestens ein Modul eines Turbotriebwerks nach einem der vorstehenden Ansprüche.

## Claims

1. A turbine engine module with longitudinal axis X, comprising:
- an unducted propeller (2) intended to be driven in rotation about the longitudinal axis X,
- at least one flow straightener (3) comprising a plurality of stator vanes (23) extending substantially along a radial axis Z, each stator vane (23) comprising a root (25) and a blade (24) rising radially from the root (25), and
- a system (34) for changing the pitch of the blades of the stator vanes (23) about a pitch axis A that passes through the root (25) of each stator vane (23),
**characterized in that** at least two adjacent stator vanes (23) are connected to each other by at least one retaining member (37) which is coupled to the blades (24) of the stator vanes (23) by at least one pivot shaft (42) and which is mounted radially at a distance from the root (25) of the stator vanes (23), said pivot shaft (42) extending along a pivot axis B coaxial with the pitch axis A and being intended to allow the stator vanes (23) to pivot about the pivot axis B, and **in that** it comprises anti-vibration means (55) for damping vibration of the pivot shaft (42).

2. The turbine engine module according to the preceding claim, **characterized in that** the retaining member (37) comprises at least one housing (48) in which the pivot shaft (42) is mounted, at least one guide bearing (49) for the rotation of the pivot shaft (42), and the anti-vibration means (55) which are arranged between an inner surface (54) of the housing (48) and the guide bearing (49).

3. The turbine engine module according to any one of the preceding claims, **characterized in that** the anti-vibration means (55) comprise an elastic annulus centered on the pivot axis B of the pivot shaft (42).

4. The turbine engine module according to any one of the preceding claims, **characterized in that** the pitch axis A is inclined with respect to the radial axis Z.

5. The turbine engine module according to any one of the preceding claims, **characterized in that** the pivot shaft (42) passes at least in part through the blade of each stator vane (23) along the pitch axis A.

6. The turbine engine module according to any one of claims 1 to 4, **characterized in that** the pivot shaft (42) is arranged at a radially outer end (24b) of each blade (24).

7. The turbine engine module according to any one of the preceding claims, **characterized in that** the retaining member (34) is annular and extends about the longitudinal axis X.

8. The turbine engine module according to any one of the preceding claims, **characterized in that** the retaining member (37) is connected to an inlet casing (16) of the turbine engine module by a plurality of arms (50) that are distributed about the longitudinal axis X.

9. The turbine engine module according to any one of the preceding claims, **characterized in that** it comprises a de-icing device (60) for at least the pivot axis B of the pivot shaft (42), the de-icing device (60) comprising at least one hot air conveying pipe (61) intended to take hot air from a primary vein (20) of the turbine engine, the conveying pipe (61) extending at least partly inside the retaining member (37).

10. An aircraft turbine engine (1) comprising at least one turbine engine module according to any one of the preceding claims.
